# EUROPEAN PATENT APPLICATION

(11) **EP 3 747 559 A1**
(43) Date of publication of application: **09.12.2020**
(21) Application number: 19275077.6
(22) Date of filing: 07.06.2019
(51) Int. Cl.: B08B 9/055, F16L 55/42

(54) **FLOWABLE SLUSH OF FROZEN PARTICLES FOR ICE PIGGING**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Flowable slush of frozen particles for ice pigging a pipework, comprising an aqueous liquid medium, a multiplicity of frozen particulates of said aqueous liquid medium, a freezing point depressant, selected from a hydroxide ion, said hydroxide ion present in the range of less than 10wt%.

## Description

This invention relates to improvements in and relating to ice pigging, particularly to suitable depressant materials for pipework.

EP 3415843 is directed to apparatus and methods of forcing a slush or slurry though a pipe, to remove contamination.

Ice pigging is a process where the freezing point of water is depressed to approximately -5°C and widened over a temperature range between 0°C and the depressed -5°C by means of a suitable chemical addition so that a slushy ice pig is produced. This ice pig consists of ice crystals in a fluid suspension. The chemistry and temperature parameters can be varied to alter the volume fraction and size of these ice crystals and therefore vary the fluidity and carrying power of the pig. This ice pig is then pumped through the pipe system.

According to the present invention there is provided a flowable slush of frozen particles for ice pigging a pipework, comprising, an aqueous liquid medium, a multiplicity of frozen particulates of said aqueous liquid medium, a freezing point depressant, selected from a hydroxide ion, said hydroxide ion present in the range of less than 10wt%; wherein the flowable slush of frozen particles, is selected from ice in water.

The hydroxide ion, may be a metal hydroxide or non-metal hydroxide, preferably a metal hydroxide. The metal hydroxide, may be any suitable metal, such as for example a group I, group II, group III or transition metal, preferably a metal to form a strong base, more preferably the metal is selected from a group I, alkaline earth metal, more preferably the metal hydroxides are Li, Na or K. Alternatively non-metal hydroxides may be used such as organic hydroxides, such as for example ammonium hydroxide.

The freezing point depressant may be added in the range of from 2% to 10%, preferably in the range of from 3 to 5%wt. In a preferred arrangement the pH of the hydroxide solution may be up to pH 14, preferably greater than pH 10, strongly basic conditions, may further drive passivation of the metal pipework to be cleaned.

A suitable depressant will produce ice of the appropriate constituency and must be compatible with the materials it contacts. The depressant may preferably be compatible with a safe working practice, be easy to detect and present no significant disposal issues.

The use of hydroxides has advantageously been found to be compatible with many of the surfaces of commonly used metal pipes, welded joints, and plastic/polymer mating surfaces such as for example those commonly used within maritime platforms. The use of high pH hydroxide solutions provides a passivity of the metals, thereby providing a protective surface on the pipe and providing a freezing point depression of the flowable slush of the ice pigging process.

Typical prior art depressants have been based on weak acids, and will have a low pH and will not provide passivation of the metals. Additionally, low pH solutions (acids) promote significant corrosion in low alloy ferrous alloys.

Further prior art depressants have been based on alcohols, glycols, and sugars which provide an additional chemical or biological (such as, for example fermentation of sugars) hazard over and above any contaminates removed by the ice pigging process, therefore the alternatives need to be removed and disposed of, before the water can be safely disposed of.

The safe disposal of an alkali solution, that is a high pH solution, may be readily neutralised by the addition of an acid. This avoids the need for special chemical removal, especially dissolved alcohols and/or organic reagents.

The metal hydroxides are ionic, which mitigates the occurrence of the depressant material from precipitating out of solution. This mitigates against the formation of solid deposits of the freezing depressant being left inside pipework.

The corrosion of portions of materials used for metal pipes during accelerated aging, at elevated temperatures, shows that high pH depressants show reduced signed of corrosion, compared to low pH depressants, that are commonly found in prior art depressants.

The pipework may be any form of enclosure or elongate cavity, the pipework may be a continuous single pipe or tube or a network of pipes with a plurality of junctions, joints, at least one entrance point and at least one exit point. There may be a plurality of entrance and/or exit points. The entrance and/or exit points, may be open, or may have their flow controlled, such as, for example by means of a valve.

The pipework may be any metal or plastic, preferably the pipe is a metal pipe suitable for maritime pipework application, such as, for example copper nickel, nickel, copper, or ferrous based low alloy or stainless steel. Typically copper nickel pipe materials may be in the ratio of 70:30, 90:10 CuNi or 65:35 nickel copper alloy.

The volume fraction of the ice to water within the flowable slush may be between 50 % to 90%, more preferably in the range of form 65% to 90%, yet more preferably 70 to 80%. The flowable slush of frozen particles may be pumped through the pipework at a fixed pressure or variable pressure rate. There may be elbows, bends, or other section changes including restrictions or increases in diameter of the pipework to be cleaned which require a change in pressure of the liquid medium. The thicker viscosity of the flowable slush does not rely on high velocity flow creating turbulent flow to pick up and carry particulate to the at least one exit and therefore as flow rates are slow, such as, for example in the rnage of centimetres / second, the cleaning pipes with changes in cross section is readily achievable.

The flowable slush may be flowed through the pipework at low volume and low velocity, in the range of from 0.1 to 1 litre per second this may provide a velocity in the range of from 0.05m/s to 0.30m/s, more preferably 0.15m/s.

The total volume of ice and water required for an flowable slush cycle, ice pig cycle is at least one volume of the pipework system, more preferable at least two to three times the volume of the pipework to be cleaned, effective cleaning has been found to be readily achieved with one or two flowable slush process cycles.

The multiplicity of frozen particulates, the ice pig, may be a set volume of ice or more preferably substantially the entire volume of pipework to be flushed is filled with the flowable slush. Preferably the volume of the system to be flushed is full of slush which may then be observed at the at least one exit point of the pipework.

In a preferred arrangement the point where the flowable slush, ie ice pig emerges from the end of the pipework, then the remainder of the flowable slush is then flushed through with demineralised water. This removes all traces of the ice, the ice depressant and any dislodged detritus.

In a highly preferred arrangement, the determination of complete removal of the flowable slush and the freezing depressant may be readily determined by measuring the pH of the solution at the at least one exit point, such as, for example detecting the change of pH, such as, for example using a pH meter. The pipework may be continued to be flushed with demineralised water, until all evidence of the freezing point depressant, hydroxide ion is flushed out. This may be determined when the pH is that of only demineralised water.

According to a further aspect of the invention there is method of removing detritus from a pipework comprising at least one entrance point and at least one exit point, with a flowable slush comprising the steps of
i) filling the pipework with an aqueous liquid medium and closing off the at least one exit points, and raising the pressure of the aqueous liquid medium, such that it is greater than 1 bar, to ensure the system is leak free,
ii) preparing a flowable slush as defined herein;
iii) causing the flowable slush to be flowed from the at least one entrance point under positive pressure through the pipework, until the flowable slush appears at the at least one exit point,
iv) causing demineralised water to be flowed from the at least one entrance point under positive pressure through the pipework; pushing the slush through to the designated exit point.,
v) monitoring the pH of the demineralised water at the at least one exit point, and stopping the flow when the pH has been reduced to that of the demineralised water.

In order to provide effective cleaning after step iii) the flowable slush may be ejected from the at least one exit point, where there are a plurality of exit points, they may each be opened and closed sequentially to allow the flush of the entire pipework. The detritus may be materials or deposits from pipework manufacture or installation, organic material and airborne pollutants.

Once the system has been flushed, that is pumped through with demineralised water to remove all traces of the flowable slush and the freezing depressant, the change in pH from a highly basic high pH to that of demineralised water, can be readily determined by a pH meter. This end point determination may be provided by an automated, visual or audible signal that the pH has reduced to an acceptable level and that the presence of hydroxide ions has been removed.

In a highly preferred arrangement the following sequence, may be to fill the system to be ice pigged with demineralised water and conduct a low pressure pressure-test, such as, for example up to 6 bar, to ensure the system is leak free and the correct valve line-up is in operation for the at least one exit points. Pumping the flowable slush, ice pig, comprising the freezing point depressant, through the system until ice is seen at the at least one exit point(s) of the pipework system. The sequence of this activity is managed such that all branches and dead legs are caused to be subjected to the flowable slush, ice pig.

The final step may be to pump the flowable slush through the pipework, using clean demineralised water. Monitoring at the at least one exit, the pH of the flushed out demineralised water until all measurable traces of the hydroxide ion, the freezing point depressant in the discharge, have been removed. Optionally drying the system as appropriate.

### Results

A series of test pieces of grades of material used in pipework systems, including crevices at joints, representative welded joints for each proposed depressant were tested. The tests were undertaken to determine the compatibility of various freezing point depressants, at the flowable slush process concentrations. The trial specifically investigated the effect of corrosion if the depressants were it to ingress into crevices and remain there for a significant time interval.

To achieve this, samples of the materials of the piping systems were cut, cleaned and weighed on a calibrated balance to 0.0001g then immersed in a solution of the freezing point depressant at the intended or higher operational concentration. To accelerate any corrosion that may occur, the test temperature of +60°C was selected. Each test was run for nominally 30 days with the samples being weighed weekly. The solution was also changed weekly to ensure that the concentration was maintained and not denuded by any reaction with the metal and oxygen levels within the solution are maintained. Corrosion rates were calculated based on metal loss and the surface area of each specimen.

Crevices of the type expected in representative pipe systems were tested including those found in sleeve and socket welds. Additionally, dissimilar material crevices formed by Lokring and Swagelok mechanical connectors were also investigated.

### Citric acid

Examination of the specimen surfaces after the 30 day accelerated corrosion testing has revealed that for stainless steel, there is no appreciable corrosion and no appreciable change in appearance of the surface. Calculated annual corrosion rates are negligible. On breaking open the crevice samples no evidence of corrosion or pitting was observed. This was to be expected as citric acid is a known passivating chemical for stainless steel.

With the copper based materials, citric acid has removed all the tarnish from the 90:10 CuNi however, no evidence of significant corrosion was observed. The elevated temperature annual corrosion rate is still modest at less than 100 microns per year. For 70:30 CuNi there is no physical change in surface appearance but the annual elevated temperature corrosion rate is comparable with the 90:10 CuNi. On breaking open the crevice formed by the 70:30 CuNi sleeve and socket weld, some slight coppering was observed on the crevice surfaces. Alloy containing 65%Ni:35%Cu also exhibits a modest annual corrosion rate at the selected 60°C of the trials and there appears to be a light etch evident on the surface. On inspecting the crevices formed between the alloy 70:30 Swagelok and the 316 SS / 70:30 Lokring, no evidence of corrosion damage or pitting was observed on any crevice surfaces.

A predicted annual corrosion rate at 60°C of around 71 microns.

The corrosion trial of CMn pipe in the 10% Citric acid at 60°C produced catastrophic corrosion with the sample losing 30% of its weight in the 30 days of the trial and a calculated annual corrosion rate of 5.3mm per year. For a control, a sample of CMn was placed in demineralised water for 30 days at 60°C. This sample gave a corrosion rate of 110 microns per year.

The use of weak-acid depressants does not appear to be compatible with the CMn steel pipes. These pipe materials are used in systems which are expected to operate at elevated temperatures.

### Sodium Hydroxide

Examination of the specimen surfaces after the 30 day accelerated corrosion testing has revealed that for stainless steel, there is no appreciable corrosion and no appreciable change in appearance of the surface. Calculated annual corrosion rates were negligible. On breaking open the crevice test, no evidence of corrosion or pitting was observed on any of the crevice surfaces.

With the copper based materials, the 90:10 CuNi produced a plum coloured surface deposit but corrosion rate was minimal at the 60°C elevated temperature. For 70:30 CuNi, a light grey tarnish on the surface was observed. Again, annual corrosion rate was negligible. On breaking open the crevice formed by the 70:30 CuNi sleeve and socket weld, no evidence of corrosion or pitting was observed on the crevice surfaces.

The annual corrosion rate exhibited on the 65%Ni:35%Cu was minimal. On inspecting the crevices formed between the 65%Ni:35%Cu / 70:30 Swagelok or the 316 SS / 70:30 Lokring, no evidence of corrosion damage or pitting was observed on any crevice surface.

The CMn steel exhibited negligible corrosion and the surface after the test exhibited only a very light grey tarnish. The annual corrosion rate at 60°C was lower that the control sample in demineralised water.

The use of the alkaline earth metal hydroxide depressants appears to be compatible with the material used within marine platform pipework, and particularly useful for CMn steel pipes.

### Ethylene Glycol

Examination of the specimen surfaces after the 30 day accelerated corrosion testing has revealed that for stainless steel, there is no appreciable corrosion and no appreciable change in appearance of the surface. Annual corrosion rates are negligible. On breaking open the crevice sample no evidence of corrosion or pitting was observed on the crevice surfaces.

With the copper based materials, both the 90:10 and the 70:30 CuNi, negligible corrosion rates were observed and little change to the surface condition seen. On breaking open the crevice formed by the 70:30 CuNi sleeve and socket weld, no evidence of corrosion or pitting was observed on the crevice surfaces.

The annual corrosion rate exhibited on the 65%Ni:35%Cu was minimal. On inspecting the crevices formed between the 65%Ni:35%Cu / 70:30 Swagelok or the 316 SS / 70:30 Lokring, no evidence of corrosion damage or pitting was observed on any crevice surface.

The CMn sample exhibited a corrosion rate of 94 microns per year. This is comparable with the rate observed for the CMn in demineralised water of 110 microns per year. This comparable corrosion rate was for uninhibited high purity glycol to minimise other contaminants.

The use of the alcohol type depressants appears to be compatible with the pipes of interest, however, they provide an environmental hazard, as appreciable volumes of glycol need to be used, which has to be removed, before the water used in the ice pigging process is safe to be released and disposed of.

It has been found that strong bases, provide freezing point depressant qualities, in line with well known standards such as citric acid, glycols and sugars. Further, that the use of hydroxide ions, reduces the corrosion compared to weak acids, especially for low alloy steels. The problem of removal of glycol, or indeed other organics or alcohols, from the waste water produced as a result of the ice pigging, is therefore completely mitigated, by using hydroxide ions of group 1 alkaline earth metals.

## Claims

1. A flowable slush of frozen particles for ice pigging a pipework, comprising, an aqueous liquid medium, a multiplicity of frozen particulates of said aqueous liquid medium, a freezing point depressant, selected from a hydroxide ion, said hydroxide ion present in the range of less than 10wt%.

2. The flowable slush according to claim 1, wherein the hydroxide ion is a metal hydroxide

3. The flowable slush according to claim 2 wherein the metal hydroxide is selected from a group I alkaline earth metal

4. The flowable slush according to claim 3, wherein the metal is Li, Na or K.

5. The flowable slush according to any one of the preceding claims wherein the pipework is a copper nickel pipe, nickel copper pipe or ferrous based low alloy or stainless steel

6. The flowable slush according to claim 5, wherein the copper nickel is in the ratio of 70:30 or 90:10 CuNi or 65:35 nickel copper alloy.

7. The flowable slush according to any one of the preceding claims, wherein the freezing point depressant is in the range of from 2% to 10%.

8. The flowable slush according to any one of the preceding claims, wherein the flowable slush of frozen particles, is selected from ice in water.

9. The flowable slush according to claim 8 wherein the volume fraction of ice to water within the ice pig between 65% to 90%.

10. The flowable slush according to any one of the preceding claims, wherein the flowable slush of frozen particles are pumped through the pipework at a variable pressure rate.

11. A method of removing detritus from pipework comprising at least one entrance point and at least one exit point, with a flowable slush comprising the steps of
i) filling the pipework with an aqueous liquid medium and closing off the at least one exit points, and raising the pressure of the aqueous liquid medium, such that it is greater than 1 bar, to ensure the system is leak free,
ii) preparing a flowable slush according to any one of the preceding claims,
iii) causing the flowable slush to be flowed from the at least one entrance point under positive pressure through the pipework, until the flowable slush appears at the at least one exit
iv) causing demineralised water to be flowed from the at least one entrance point under positive pressure through the pipework,
v) monitoring the pH of the demineralised water at the at least one exit point, and stopping the flow when the pH has been reduced to that of the demineralised water.

12. A method according to claim 11, wherein the step monitoring the pH of the demineralised water is measured using a pH meter.
